# EUROPÄISCHE PATENTSCHRIFT

(11) **EP 4 580 860 B1**
(45) Veröffentlichungstag und Bekanntmachung des Hinweises auf die Patenterteilung: **11.11.2026**
(21) Anmeldenummer: 24714409.0
(22) Anmeldetag: 19.03.2024
(51) Int. Cl.: B29C 51/10, A47K 3/04, A47K 3/10, A47K 3/022, B29K 33/00, B29K 55/02, B29L 31/00

(54) **VERFAHREN ZUR HERSTELLUNG EINES FORMTEILS IM SANITÄRBEREICH MITTELS TIEFZIEHVERFAHREN**
METHOD FOR THE PRODUCTION OF A MOULDED PART IN THE SANITATION SECTOR BY MEANS OF A DEEP-DRAWING PROCESS
PROCÉDÉ DE PRODUCTION DE PIÈCE MOULÉE PAR UN PROCÉDÉ D'EMBOUTISSAGE PROFOND, DANS LE SECTEUR DES INSTALLATIONS SANITAIRES

(30) Priorität: 24.03.2023 DE 102023107470
(43) Veröffentlichungstag der Anmeldung: 09.07.2025
(73) Patentinhaber: Schleichert, Winfried, 36320 Kirtorf (DE)
(72) Erfinder: Schleichert, Winfried, 36320 Kirtorf (DE)
(74) Vertreter: Köllner, Malte
(86) Internationale Anmeldenummer: PCT/EP2024/057230
(87) Internationale Veröffentlichungsnummer: WO 2024/200090

(56) Entgegenhaltungen:
- DE-A1- 2 032 870
- DE-B4- 102004 031 883
- DE-U1- 202007 009 025
- US-A- 4 796 312
- US-A1- 2012 284 913

## Beschreibung

### Gebiet der Erfindung

Die Erfindung betrifft ein Verfahren zur Herstellung eines Formteils im Sanitärbereich mittels Tiefziehverfahren sowie das entsprechende Formteil.

### Stand der Technik

Insbesondere im Senioren- und Pflegebereich sind Sitzbadewannen mit einer Tür, die den Einstieg erleichtern, von großem Vorteil. Eine derartige komfortable Sitzbadewanne wird von der Anmelderin in der DE 10 2004 031 883 B4 beschrieben.

Herstellung von schalenförmigen Formteilen mittels Tiefziehverfahren, wie Badewannen oder Waschbecken, sind seit langem bekannt. Dazu werden in der Regel thermoplastische Kunststoffmaterialien, beispielsweise Sanitäracryl (PMMA-Polymethylmethacrylat, auch als Acrylglas bezeichnet) verwendet. Der Kunststoff wird in Plattenform bis zur thermischen Verformbarkeit in einem Ofen erhitzt und anschließend mittels Vakuum über eine entsprechende Tiefziehform gezogen. Es erfolgt die Abkühlung des Kunststoffs auf der Form bis unter die Verformungsgrenze, so dass der Kunststoff die Formgebung der Tiefziehform beibehält.

Je komplexer die geometrische Gestaltung des Formteils ist, umso schwieriger ist es, ein intaktes Produkt in einem Verfahrensschritt zu erhalten, ohne diverse Anformungsschritte durchführen zu müssen. Bei Sitzbadewannen im Besonderen ist es zudem wünschenswert, einen hohen Wasserstand zu ermöglichen.

### Aufgabe

Aufgabe der Erfindung ist es, ein Verfahren anzugeben, das die Herstellung eines Formteils im Sanitärbereich, vorzugsweise ein Wannentrog einer Sitzbadewanne, in einem einzigen Tiefziehschritt, ohne diverse Anformungsschritte, ermöglicht.

### Lösung

Diese Aufgabe wird durch die Gegenstände der unabhängigen Ansprüche gelöst. Vorteilhafte Weiterbildungen der Gegenstände der unabhängigen Ansprüche sind in den Unteransprüchen gekennzeichnet. Der Wortlaut sämtlicher Ansprüche wird hiermit durch Bezugnahme zum Inhalt dieser Beschreibung gemacht.

Die Verwendung der Einzahl soll die Mehrzahl nicht ausschließen, was auch im umgekehrten Sinn zu gelten hat, soweit nichts Gegenteiliges offenbart ist.

Im Folgenden werden einzelne Verfahrensschritte näher beschrieben. Die Schritte werden in einer bevorzugten Variante der Erfindung in der angegebenen Reihenfolge ausgeführt. Die Schritte müssen aber nicht notwendigerweise in der angegebenen Reihenfolge durchgeführt werden, und das zu schildernde Verfahren kann auch weitere, nicht genannte Schritte aufweisen.

Zur Lösung der Aufgabe wird ein Verfahren zur Herstellung eines Formteils im Sanitärbereich mittels Tiefziehverfahren vorgeschlagen, bei dem die Tiefziehform während des Tiefziehvorgangs in Relation zur Position des fertigen Formteils um 10°-80° gekippt, vorteilhaft um 20°-60°, besonders bevorzugt um 45° gekippt ist, das formbare, thermoplastische Material tiefgezogen wird, nach Aushärtung des tiefgezogenen Formteils dieses aus der Tiefziehform entnommen wird.

Mithilfe des vorgeschlagenen Verfahrens kann ein Formteil im Sanitärbereich, vorzugsweise ein Wannentrog einer Sitzbadewanne mittels Tiefziehverfahren hergestellt werden. Es sind jedoch auch andere Sanitärteile mit ähnlichen Formen denkbar.

Die vorgeschlagene Sitzbadewanne besteht aus einem Wannentrog mit einem ausgeformten Sitz der nach unten in einen Boden und einer Schürze endet. Der ausgemuldete Sitz des Wannentrogs hat ein Niveau, das weit unter dem späteren Wasserspiegel der Sitzbadewanne liegt.

Wie von der Anmelderin in der DE 10 2004 031 883 B4 beschrieben, weist die fertige Sitzbadewanne noch eine Tür und Verkleidungswände auf. Gegenstand dieser Anmeldung ist jedoch die Herstellung eines Wannentrogs.

Um in der fertigen Sitzbadewanne einen Wasserstand zu erreichen, der weit über dem Sitz des Wannentrogs liegt, soll die Sitzbadebadewanne eine Höhe von mindestens 85cm aufweisen, vorzugsweise 90cm-140cm, besonders bevorzugt 100cm-130cm. Diese Werte werden gemessen vom Ende der Schürze bis zum oberen Rand der Sitzbadewanne, dem Auflagenflansch.

Gefunden wurde nun, dass wenn man die Tiefziehform des Wannentrogs im Verhältnis zur aufrechtstehenden Position, wie die fertige Sitzwanne später verwendet wird, mit dem Boden parallel zum Zimmerboden, um 20-60° kippt, vorteilshaft um 45°, muss das formbare, thermoplastische Material, insbesondere ein Kunststoff, weniger Tiefe überwinden. Es steht mehr Fläche zur Verfügung, der Kunststoff wird beim Tiefziehen in seiner Ausdehnung nicht zu dünn und platzt nicht. Mithilfe des angegebenen Verfahrens ist es also möglich, ein Formteil im Sanitärbereich, vorzugsweise ein Wannentrog einer Sitzbadewanne in einem einzigen Tiefziehschritt herzustellen. Es sind keine Anformungen oder gar die Herstellung mehrere Teile des Wannentrogs notwendig, die hinterher thermisch zusammengeformt werden müssen.

Bei einer Weiterbildung der Erfindung weist die Höhe der Tiefziehform dieselbe Länge auf wie die längste Breite der Tiefziehform, oder ist um 0,1%-25% länger als diese, und die Höhe der Tiefziehform weist dieselbe Länge wie die kürzeste Breite der Tiefziehform auf, oder ist um 0,1%-25% kürzer als diese.

Günstig ist es zudem, wenn die Höhe der Tiefziehform dieselbe Länge wie der Abstand von der Rückwand der Tiefziehform bis zum Türeinsatz aufweist, oder um 0,1%-30% kürzer ist als diese.

Würde man die Tiefziehform des Wannentrogs in diesen Abmessungen senkrecht, d.h. aufrechtstehend in der Position, wie die fertige Sitzwanne später verwendet wird, mit dem Boden parallel zum Zimmerboden, im Verfahren einsetzen und das formbare, thermoplastische Material, insbesondere ein Kunststoff, über die aufrecht positionierte Form des Wannentrogs tiefziehen, könnte der Kunststoff durch die seitlichen Wände der Wannentrogform sich nicht komplett (bis nach unten zum Boden hin) ausdehnen, so dass die komplette Form vom Kunststoff überzogen ist, und kann platzen. In dieser Position der Tiefziehform des Wannentrogs wäre nur die Herstellung eine Sitzbadewanne bis etwa 85cm Tiefe möglich.

Es ist weiterhin Gegenstand des erfindungsgemäßen Verfahrens, dass das formbare, thermoplastische Material ein Kunststoff, vorzugsweise Polymethylmethacrylat (PMMA), besonders bevorzugt Polymethylmethacrylat / Acrylnitril-Butadien-Styrol (PMMA/ABS) ist. Vorzugsweise wird das formbare, thermoplastische Material in Form von Platten in dem Tiefziehverfahren eingesetzt. Besonders geeignet sind dabei Coextrudierte ABS/PMMA Verbundplatten. Die Platten können Abmessungen von 2,60m-2,00m x 2,20m-1,70m haben und eine Dicke von bis zu 8mm-10mm, vorzugsweise 4mm-5mm aufweisen.

Die Aufgabe wird ferner gelöst durch ein Formteil, insbesondere einen Wannentrog einer Sitzbadewanne, erhältlich mittels des beschriebene Tiefziehverfahrens.

Gemäß einem weiteren Aspekt der vorliegenden Erfindung weist die Höhe des Wannentroges dieselbe Länge wie die längste Breite des Wannentroges auf, oder ist um 0,1%-25% länger als diese, und zudem weist die Höhe des Wannentroges dieselbe Länge auf wie die kürzeste Breite des Wannentroges, oder um 0,1%-25% kürzer ist als diese.

Die Bezeichnung "Höhe des Wannentrogs" bezieht sich auf die Höhe des Wannentrogs vom unteren Ende der Schürze bis zum oberen Abschluss des Wannentrogs, der durch einen Flanschbereich gebildet wird, dem Auflagenflansch. In diesem Flanschbereich können die Wasser-Zulaufarmaturen und Teile für den Türverschluss angebracht sein. Die Bezeichnung "Tiefe des Wannentrogs" bezieht sich auf die Höhe vom Boden des Wannentrogs bis zum Auflagenflansch.

In einer Ausgestaltungsform weist die Höhe des Wannentrogs dieselbe Länge auf wie der Abstand von der Rückwand des Wannentrogs bis zum Türeinsatz, oder ist um 0,1%-30% kürzer als diese.

Weiterhin weist der Wannentrog vorteilhafterweise eine Höhe von mindestens 85cm auf, vorzugsweise 90cm-150cm, besonders bevorzugt 100cm-130cm. Gemäß einem weiteren Aspekt der vorliegenden Erfindung weist der Wannentrog eine Tiefe von mindestens 85cm auf, vorzugsweise 86cm-140cm, besonders bevorzugt 90cm-120cm. Der obere Abschluss des Wannentrogs wird, wie eingangs beschrieben, durch einen Auflagenflansch gebildet. Nicht inbegriffen in diesen Bereichsangaben sind irgendwelche An- oder Aufbauten am oberen Ende des Wannentrogs, des Auflagenflansches, sowie an der unteren Schürze, die nach Herstellung des Wannentrogs angebracht werden und diesen erhöhen.

Wie eingangs erwähnt, weist die fertige Sitzbadewanne noch eine Tür und Verkleidungswände auf. Die bevorzugte Höhe der Badewanne von vorzugsweise 90cm-150cm, besonders bevorzugt 100cm-130cm, ermöglicht einen Wasserstand, der weit über dem Sitz des Wannentrogs liegt.

Vorzugsweise weist der Wannentrog mindestens eine Sitzfläche auf. Der mindestens eine Sitz weist eine übliche Höhe von etwa 40cm auf. So kann speziell auch gehbehinderten Menschen bei einem Ganzkörper-Sitzbad mit hohen Wasserstand ein angenehmes Badegefühl vermittelt werden. Zudem ermöglicht der hohe Wasserstand Wasserbewegungstherapien, wie leichte Wassergymnastik, in der Sitzbadewanne. So können Gelenkprobleme und Verspannungen durch leichte Bewegung im Wasser ohne körperliche Belastung gelindert und vorgebeugt werden.

Weiterhin ist eine Sitzbadewanne mit einem Wannentrog, erhältlich mittels des beschriebene Tiefziehverfahrens, Gegenstand der Anmeldung.

Mithilfe des beschrieben Verfahrens können Wannentröge für Sitzbadewannen unterschiedlicher Grundformen hergestellt werden. Die Sitzbadewanne kann so als mobiler und stationärer Typ ausgebildet sein. Sie kann als Wandversion, Eckbadewanne oder auch als runde Variante gestaltet sein. Zudem sind auch mehrere Sitzflächen möglich, an jeder Innenwandfläche des Wannentrogs. So können auch mehrere Personen gleichzeitig ein Sitzbad nehmen. Auch kann ein Whirlpoolsystem im Wannentrog der Sitzbadewanne integriert sein. Dazu ist es vorteilhaft, dass der Wannentrog im Boden und/oder auf einer Sitzfläche Lufteinblasöffnungen aufweist. An der Rückseite des Wannentrogs werden entlang der Lufteinblasöffnungen Luftkanäle, vorzugsweise Acrylkanäle, mit dem Wannentrog fest verbunden und zu einer Einheit laminiert. Über die Lufteinblasöffnungen, die vorzugsweise U-förmig im Boden und/oder auf einer Sitzfläche angeordnet sind, kann Luft in die Sitzbadewanne eingeblasen werden.

Die so fest verbundenen Systeme aus Wannentrog und Luftkanal haben den Vorteil, dass kein Wasser aus dem Luftkanal austreten kann. Es gibt keine Dichtung, die undicht werden kann, wie beispielsweise beim Einsatz von Luftdüsen in einem Whirlpool. Zudem ermöglichen die vielen kleinen Lufteinblasöffnungen eine schonende und gleichmäßige Luftverteilung, so dass der Körper des Badenden nicht von einem starken Wasserstrahl getroffen wird. Zu starke Wasserstrahlen könne insbesondere bei älteren Personen Ablagerungen im Körper lösen, was zu gesundheitlichen Problemen führen kann.

Weitere Einzelheiten und Merkmale ergeben sich aus der nachfolgenden Beschreibung von bevorzugten Ausführungsbeispielen in Verbindung mit den Figuren. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:
- Fig. 1: eine schematische Darstellung einer Sitzbadewanne
- Fig. 2: eine schematische Darstellung der Tiefziehform;
- Fig. 3A: eine Aufsicht auf eine Wandversion der Sitzbadewanne;
- Fig. 3B: eine Aufsicht auf eine Eckversion der Sitzbadewanne; und
- Fig. 4: eine Seitenansicht des Wannentrogs der Sitzbadewanne mit Tür.

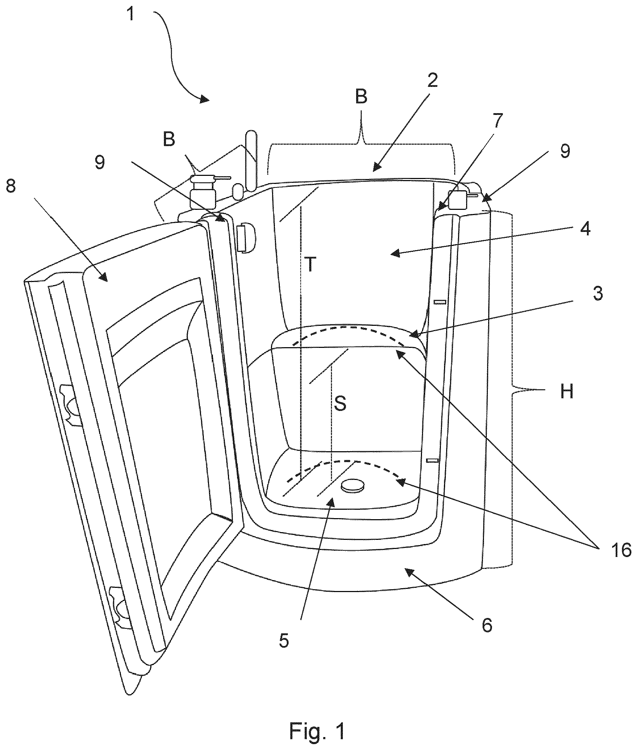

Fig. 1 zeigt eine Sitzbadewanne (1), den Wannentrog (2) mit einer Sitzfläche (3), einer Rückwand (4), einen Boden (5), einer Schürze (6) und einem Auflagenflansch (7). Zudem ist zur Vervollständigung eine geöffnete Tür (8) gezeigt. Wie von der Anmelderin in der DE 10 2004 031 883 B4 beschrieben, weist die fertige Sitzbadewanne noch eine Tür und Verkleidungswände auf. Die Tür sowie Verkleidungswände sind jeweils separate Formteile und werden nicht im selben Verfahrensschritt wie die Herstellung des Wannentrogs produziert. Der Wannentrog (2) weist eine Ansatzfläche (9) für die Tür (8) auf. Die Tür kann je nach Bedarf so gestaltet sein, dass sie nach innen oder außen öffenbar ist, ein- oder mehrteilig gestaltet sein kann oder gar als Schiebetür nach oben hin öffenbar ist.

Vorgesehen ist es, dass die Höhe (H) des Wannentroges dieselbe Länge wie die längste Breite (B) des Wannentroges auf, oder ist um 0,1%-25% länger als diese, und zudem weist die Höhe (H) des Wannentroges dieselbe Länge auf wie die kürzeste Breite (B) des Wannentroges, oder um 0,1%-25% kürzer ist als diese. Weiterhin weist der Wannentrog vorteilhafterweise eine Höhe (H) von mindestens 85cm auf, vorzugsweise 90cm-150cm, besonders bevorzugt 100cm-130cm. Gemäß einem weiteren Aspekt der vorliegenden Erfindung weist der Wannentrog eine Tiefe (T) von mindestens 85cm auf, vorzugsweise 86cm-140cm, besonders bevorzugt 90cm-120cm.

Die Bezeichnung "Höhe des Wannentrogs" bezieht sich auf die Höhe des Wannentrogs vom unteren Ende der Schürze bis zum oberen Abschluss des Wannentrogs, der durch einen Flanschbereich gebildet wird, dem Auflagenflansch. In diesem Flanschbereich können die Wasser-Zulaufarmaturen und Teile für den Türverschluss angebracht sein. Die Bezeichnung "Tiefe des Wannentrogs" bezieht sich auf die Höhe vom Boden des Wannentrogs bis zum Auflagenflansch. Die Bezeichnung "Breite des Wannentroges" (B) bezieht sich auf die kürzeste oder längste Breite es Wannentroges, von einer Seite des Auflagenflansches zur anderen.

Der obere Abschluss des Wannentrogs wird, wie eingangs beschrieben, durch einen Auflagenflansch gebildet. Nicht inbegriffen in diesen Bereichsangaben sind irgendwelche An- oder Aufbauten am oberen Ende des Wannentrogs, des Auflagenflansches, sowie an der unteren Schürze, die nach Herstellung des Wannentrogs angebracht werden und diesen erhöhen.

Die bevorzugte Höhe der Badewanne (H), gemessen vom Ende der Schürze (6) bis zum oberen Rand von vorzugsweise 90cm-150cm, besonders bevorzugt 100cm-130cm, ermöglicht einen Wasserstand, der weit über dem Sitz des Wannentrogs liegt. Vorzugsweise weist der Sitz (3) eine übliche Höhe (S) von etwa 40cm auf. So kann speziell auch gehbehinderten Menschen bei einem Ganzkörper-Sitzbad mit hohen Wasserstand ein angenehmes Badegefühl vermittelt werden.

In einem Ausführungsbeispiel beträgt die längste Breite (B) des Wannentroges 96cm, die Höhe (H) 100cm, die Tiefe (T) 86cm, Sitzhöhe (S) 40cm.

In einem weiteren Ausführungsbeispiel beträgt die längste Breite (B) des Wannentroges 110cm, die Höhe (H) 110cm, die Tiefe (T) 90cm, Sitzhöhe (S) 40cm.

In noch einem weiteren Ausführungsbeispiel beträgt die längste Breite (B) des Wannentroges 100cm, die Höhe (H) 130cm, die Tiefe (T) 106cm, Sitzhöhe (S) 40cm.

Auch kann ein Whirlpoolsystem im Wannentrog der Sitzbadewanne integriert sein. Dazu ist es vorteilhaft, dass der Wannentrog im Boden (5) und/oder auf einer Sitzfläche (3) Lufteinblasöffnungen (16) aufweist. Über die Lufteinblasöffnungen, die vorzugsweise U-förmig im Boden (5) und/oder auf einer Sitzfläche (3) angeordnet sind, kann Luft in die Sitzbadewanne eingeblasen werden, was eine Herz-und Kreislaufschonende Sprudelmassage ermöglicht.

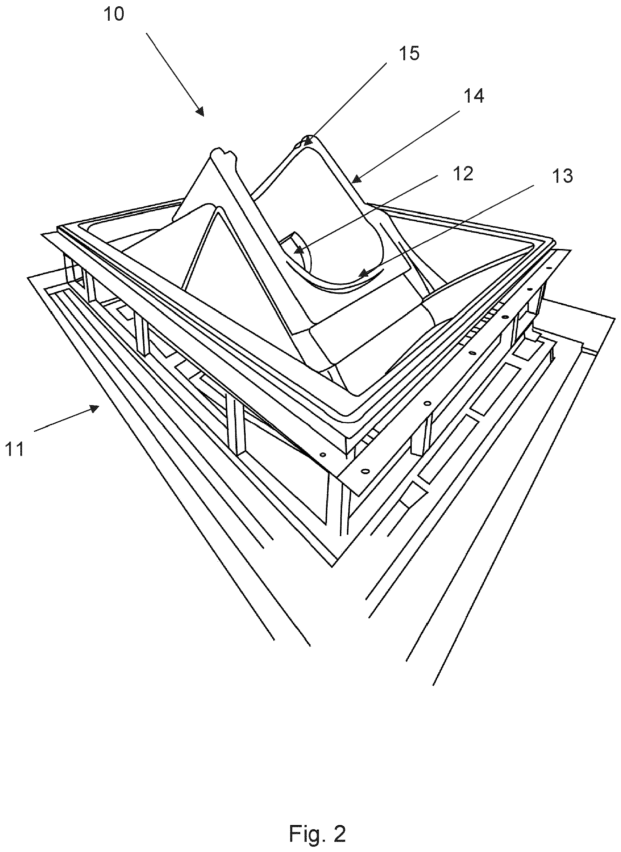

Fig. 2 zeigt eine Tiefziehform für einen Wannentrog (10) auf einem Gestell (11). Die Tiefziehform für einen Wannentrog (10) ist im Verhältnis zur aufrechtstehenden Position, wie die fertige Sitzwanne später verwendet wird, mit dem Boden parallel zum Zimmerboden, um etwa 30-50° gekippt. Die Sitzfläche der Tiefziehform (12), die Rückwand der Tiefziehform (13), der Auflagenflansch der Tiefziehform (14) sowie die Tür-Ansatzfläche der Tiefziehform (15) können auf diese Weise gut von dem formbaren, thermoplastische Material während des Tiefziehvorganges abgeformt werden.

Das formbare, thermoplastische Material, insbesondere eine coextrudierte ABS/PMMA Verbundplatte wird in einem Ausführungsbeispiel auf einem Rahmen in einem Ofen bis zur gewünschten Viskosität erwärmt, herausgefahren. Die Tiefziehform auf dem Gestellt wird mithilfe eines Hebemechanismus hochgefahren, der Rahmen mit dem Gestell luftdicht verschlossen und ein Vakuum angelegt. Das viskose ABS/PMMA wird in die Tiefziehform hineingezogen. Durch diese Positionierung der Tiefziehform muss das formbare, thermoplastische Material weniger Tiefe überwinden. Es steht mehr Fläche zur Verfügung, der Kunststoff wird beim Tiefziehen in seiner Ausdehnung nicht zu dünn und platzt nicht. Mithilfe des angegebenen Verfahrens ist es also möglich, einen Wannentrog einer Sitzbadewanne in einem einzigen Tiefziehschritt herzustellen. Es sind keine Anformungen oder gar die Herstellung mehrere Teile des Wannentrogs notwendig, die hinterher thermisch zusammengeformt werden müssen.

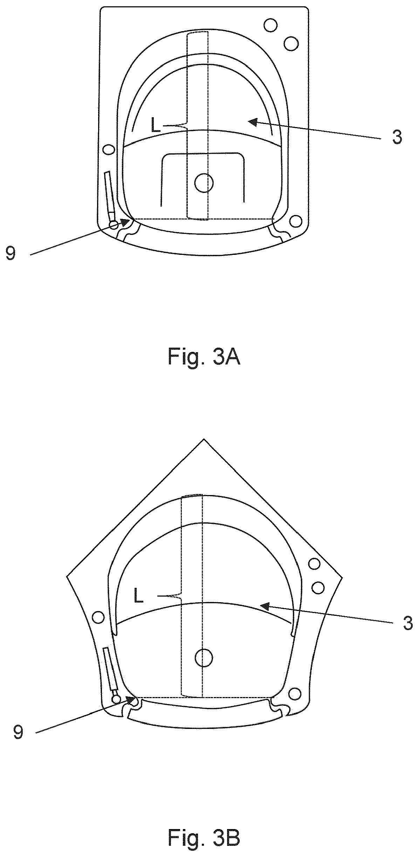

Fig. 3A zeigt eine Aufsicht auf eine Wandversion der Sitzbadewanne mit geschlossener Tür. In einer Ausgestaltungsform weist die Höhe des Wannentrogs dieselbe Länge auf wie der Abstand (L) von der Rückwand des Wannentrogs bis zum Türeinsatz, oder ist um 0,1%-30% kürzer als diese.

Fig. 3B zeigt eine Aufsicht a auf eine Eckversion der Sitzbadewanne mit geschlossener Tür. In einer Ausgestaltungsform weist die Höhe des Wannentrogs dieselbe Länge auf wie der Abstand (L) von der Rückwand (innen) des Wannentrogs bis zum Türeinsatz, oder ist um 0,1%-30% kürzer als diese.

In einem Ausführungsbeispiel beträgt die längste Breite (B) des Wannentroges 96cm, die Höhe (H) 100cm, die Tiefe (T) 86cm, Abstand (L) 80cm, Sitzhöhe (S) 40cm.

In einem weiteren Ausführungsbeispiel beträgt die längste Breite (B) des Wannentroges 110cm, die Höhe (H) 110cm, die Tiefe (T) 90cm, Abstand (L) 98cm, Sitzhöhe (S) 40cm.

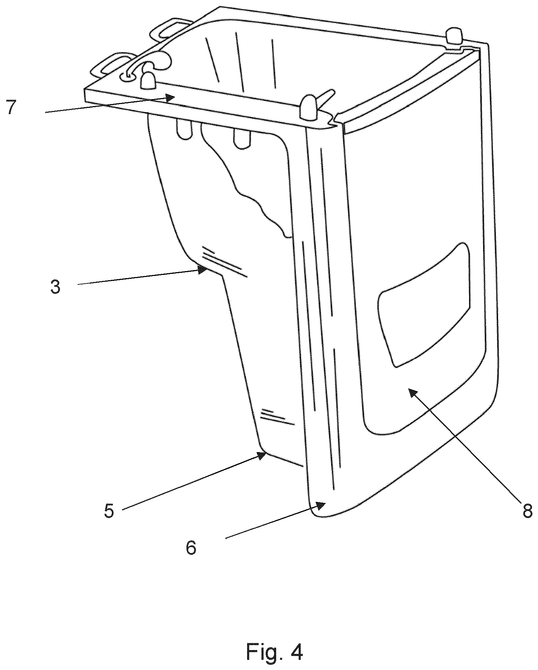

Fig. 4 zeigt eine Seitenansicht des Wannentrogs der Sitzbadewanne mit Tür (8), ohne seitliche Verkleidungswände. Es ist deutlich zu sehen, dass die Schürze (6) des Wannentrogs über den Boden (2) hinausgeht.

### Bezugszeichen

- 1: Sitzbadewanne
- 2: Wannentrog
- 3: Sitzfläche
- 4: Rückwand
- 5: Boden
- 6: Schürze
- 7: Auflagenflansch
- 8: Tür
- 9: Tür-Ansatzfläche
- 10: Tiefziehform Wannentrog
- 11: Gestell
- 12: Sitzfläche der Tiefziehform
- 13: Rückwand der Tiefziehform
- 14: Auflagenflansch der Tiefziehform
- 15: Tür-Ansatzfläche der Tiefziehform
- 16: Lufteinblasöffnungen

- B: Breite
- T: Tiefe
- H: Höhe
- L: Länge
- S: Sitzhöhe

## Patentansprüche

1. Verfahren zur Herstellung einer Sitzbadewanne mittels Tiefziehverfahren,
**dadurch gekennzeichnet,**
**dass** die Tiefziehform (10) während des Tiefziehvorgangs in Relation zur Position des fertigen Formteils um 10-80° gekippt, vorteilhaft um 20-60°, besonders bevorzugt um 45° gekippt ist;
**dass** das formbare, thermoplastische Material tiefgezogen wird;
**dass** nach Aushärtung des tiefgezogenen Formteils dieses aus der Tiefziehform entnommen wird.

2. Verfahren nach dem vorhergehenden Anspruch,
**dadurch gekennzeichnet,**
die Höhe (H) der Tiefziehform (10) dieselbe Länge wie der Abstand (L) von der Rückwand der Tiefziehform (13) bis zum Türeinsatz (15) aufweist, oder um 0,1%-30% kürzer ist als diese.

3. Verfahren nach einem der vorhergehenden Ansprüche,
**dadurch gekennzeichnet,**
**dass** das formbare, thermoplastische Material ein Kunststoff ist, besonders bevorzugt Polymethylmethacrylat / Acrylnitril-Butadien-Styrol (PMMA / ABS);
wobei das thermoplastische Material in Form von Platten in dem Tiefziehverfahren eingesetzt wird.

## Claims

1. A method for producing a sitz bathtub by means of a deep-drawing process,
**characterized in that**
the deep-drawing mould (10), during the deep-drawing operation, is tilted by 10-80° relative to the position of the finished moulded part, advantageously by 20-60°, particularly preferably by 45°;
the formable thermoplastic material is deep-drawn;
after curing of the deep-drawn moulded part, said deep-drawn moulded part is removed from the deep-drawing mould.

2. The method according to the preceding claim,
**characterized in that**
the height (H) of the deep-drawing mould (10) has the same length as the distance (L) from the rear wall of the deep-drawing mould (13) to the door insert (15), or is shorter than said distance by 0.1%-30%.

3. The method according to any one of the preceding claims,
**characterized in that**
the formable thermoplastic material is a plastics material, particularly preferably polymethyl methacrylate / acrylonitrile butadiene styrene (PMMA / ABS);
wherein the thermoplastic material is used in the deep-drawing process in the form of sheets.

## Revendications

1. Procédé de fabrication d'une baignoire à siège au moyen d'un procédé d'emboutissage profond,
**caractérisé en ce que**
le moule d'emboutissage profond (10), pendant l'opération d'emboutissage profond, est incliné de 10 à 80° par rapport à la position de la pièce moulée finie, avantageusement de 20 à 60°, de manière particulièrement préférée de 45°;
le matériau thermoplastique formable est embouti en profondeur;
après durcissement de la pièce moulée emboutie en profondeur, celle-ci est retirée du moule d'emboutissage profond.

2. Procédé selon la revendication précédente,
**caractérisé en ce que**
la hauteur (H) du moule d'emboutissage profond (10) présente la même longueur que la distance (L) entre la paroi arrière du moule d'emboutissage profond (13) et l'insert de porte (15), ou est plus courte que celle-ci de 0,1 % à 30 %.

3. Procédé selon l'une quelconque des revendications précédentes,
**caractérisé en ce que**
le matériau thermoplastique formable est une matière plastique, de manière particulièrement préférée du polyméthacrylate de méthyle / acrylonitrile-butadiène-styrène (PMMA / ABS);
dans lequel le matériau thermoplastique est utilisé sous forme de plaques dans le procédé d'emboutissage profond.
